# EUROPEAN PATENT SPECIFICATION

(11) **EP 0 568 513 B1**
(45) Date of publication and mention of the grant of the patent: **03.12.1997**
(21) Application number: 93850090.7
(22) Date of filing: 26.04.1993
(51) Int. Cl.: B23B 27/04

(54) **Tool for cut-off or similar turning operations**
Werkzeug zum Abschneiden oder ähnlichen Dreharbeiten
Outil de tronçonnage ou de travaux de tournage simulaires

(30) Priority: 28.04.1992 SE 9201323
(43) Date of publication of application: 03.11.1993
(73) Proprietor: SANDVIK AKTIEBOLAG, 811 81 Sandviken (SE)
(72) Inventor: Hedlund, Thomas, S-812 02 Gästrike-Hammarby (SE)
(74) Representative: Taquist, Lennart

(56) References cited:
- EP-A- 242 343
- EP-A- 0 291 933
- EP-A- 0 417 862

## Description

### Field of the Invention

This invention relates to a tool for cut-off or similar turning operations of the type according to the preamble of claim 1.

### Description of the Prior Art

A cut-off tool of the general type described above is previously known from SE 8601533-6 (Publ. No. 452 713), EP-A-242 343. In this prior-art tool, the individual V-groove in the insert, as well as the V-ridge cooperating therewith, is designed with, at least theoretically, planar flank surfaces, the obtuse angle between the flank surfaces of the V-groove being about 140° and the corresponding angle between the flank surfaces of the ridge about 130°, which means that the clearance angle between each flank surface of the ridge and the cooperating flank surface of the groove is about 5°, counting from the line along which the surfaces contact each other. In practice, the contact between the flank surfaces or flank sides of the groove and of the ridge is however seldom a true line contact, since after a varying time of use of the tool the steel of the holder plate, which is considerably softer than the cemented carbide of the insert, allows by plastic deformation a certain "settling" of the insert relative to the flank sides of the V-ridge, such that a certain, in itself not adverse surface contact arises (however still only in the vicinity of the theoretical contact line). This surface contact presupposes that the insert on its cross-sectionally V-shaped underside is essentially straight in its longitudinal extent. In actual practice, this is however not always the case. Thus, the result after compacting and sintering of the series-produced cemented carbide inserts may vary considerably between, on the one hand, almost completely straight inserts (underside concavity < 0.01 mm) to clearly concave inserts (concavity: 0.05-0.08 mm). In the last-mentioned inserts, the flank surfaces of the V-groove almost completely lose contact with the corresponding flank surfaces of the V-ridge in its central area, surface or line contact being achieved only in the immediate vicinity of the two opposite ends of the insert. This is quite unsatisfactory, in that there is an imminent risk of chipping and crack formation in the insert.

To overcome the above-mentioned risk, it is conceivable per se to scrap all clearly concave inserts in the same way as is regularly done with inserts having convex undersides. However, the proportion of concave inserts in a series may be considerable, for which reason such scrapping would entail substantial economic losses.

Further, in EP-A-417 862 a cutting tool assembly for cut-off and similar operations is disclosed, according to which a replaceable cutting insert is clampingly held between a pair of clamping jaws of an insert holder which are respectively provided with pairs of clamping surfaces. At least one pair of clamping surfaces is of uniformly curved cross-sectional shape, whilst the other pair of clamping surfaces being of non-uniformly curved cross-sectional shape. The arrangement is such that when the insert is clamped between the jaws, the respective clamping surfaces contact each other along discrete, axially directed locations which are symmetrically disposed with respect to and axially spaced from a median plane on the insert. However, this construction is marred by the inconvenience that there is no defined vertical position, since the groove of the clamping surface has a uniformly curved, circular cross-section. Thus, the insert can easily move and become dislocated from its upright, predetermined position during operation. Moreover, the rounded surfaces according to EP-A-417 862 are relatively difficult to manufacture.

### Summary of the Invention

The present invention aims at overcoming the problems related above and improving, in a simple manner, the conditions for a completely reliable use of cemented carbide inserts having concave undersides. A basic object of the invention thus is provide a cut-off tool whose V-groove or V-grooves, which determine the position of the insert, are capable of compensating for at least minor tolerance deviations in different inserts and of ensuring optimum engagement or contact surfaces between the insert and the tool.

The above-mentioned object is achieved by means of a tool having the features stated in the characterising clause of claim 1.

### Brief Description of the Drawings

In the drawings,
- FIG. 1: is a partial perspective view of an inventive tool with an insert mounted thereon,
- FIG. 2: is a similar perspective view illustrating the tool without the insert,
- FIG. 3: is a perspective view of the insert,
- FIG. 4: is a vertical cross-section on an exaggerated scale showing the lower portion of the insert and the upper portion of the subjacent part of the tool,
- FIG. 5: is a similar cross-section, although on a smaller scale, showing the corresponding tool part according to the prior art,
- FIG. 6: is a top plan view of the same prior-art tool part,
- FIGS 7 and 8: are a similar section and top plan view, respectively, illustrating the tool according to the present invention, and
- FIGS 9 and 10: are a section and a top plan view, respectively, illustrating a further embodiment according to the prior art.

### Detailed Description of a Preferred Embodiment of the Invention

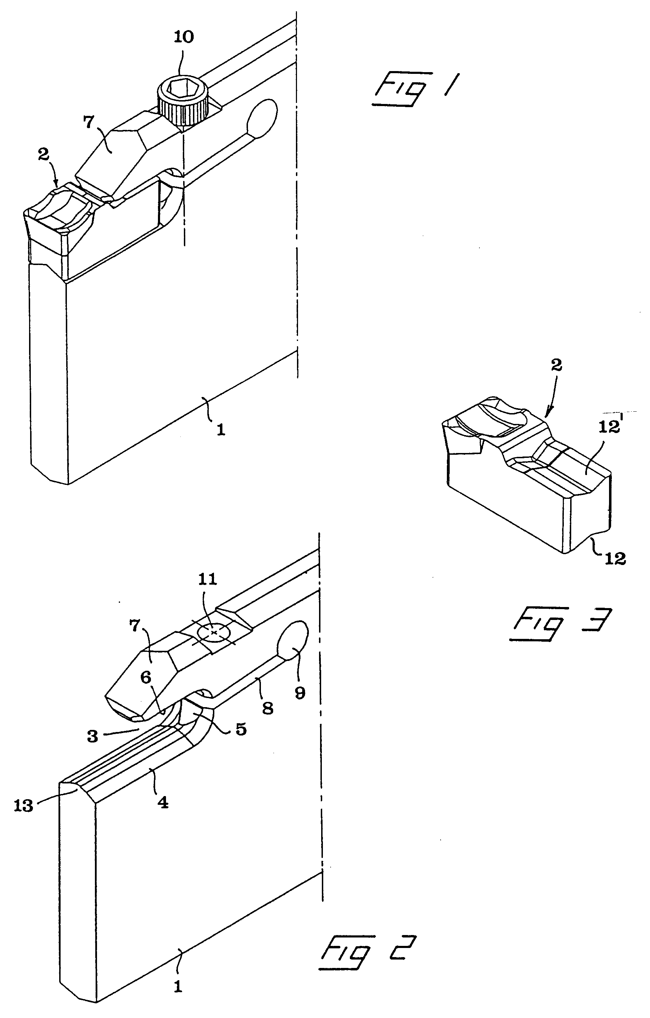

Figs 1 and 2 illustrate a tool holder in the form of a comparatively thin plate or plate-like part 1, which may in itself form an independent tool or be part of a tool which also comprises a shank extending transversely of the plate. In practice, the holder plate 1 is made of steel. At the left-hand end of the plate 1 in Figs 1 and 2, there is provided a recess 3 which opens outwardly and is intended for receiving a cutting insert 2. The recess 3 is substantially defined by a bottom wall generally designated 4, an inner or rear wall 5, as well as an upper wall 6 which is part of an elastically movable clamping arm 7 formed in the plate 1. From the rear wall 5 extends a comparatively narrow slot 8 ending in a hole 9 which extends through the plate 1 and whose diameter is larger than the height of the slot. The arm 7 serves to clamp the insert 2 against the bottom wall 4, to which end there is provided a clamping screw 10 passing through a substantially vertical hole 11 in the clamping arm and engaging a threaded hole formed in the plate under the slot 8. By the inherent elasticity of the steel material, the clamping arm 7, defined by the slot 8, can be elastically pivoted and can firmly clamp the insert by tightening the screw with a suitable torque.

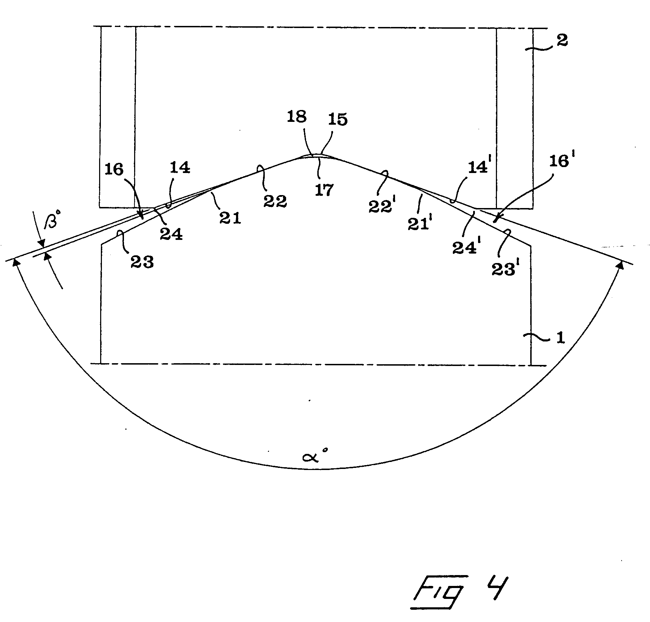

The insert 2, consisting of cemented carbide, has on its underside (Fig. 3) a groove, generally designated 12, which is V-shaped in cross-section and which is to cooperate with a cam or ridge 13 similarly having a substantially V-shaped cross-section and forming or being part of the bottom wall 4 of the recess 3. The V-groove 12 in the underside of the insert (Fig. 4) is defined by two planar flank surfaces 14, 14', which are separated from each other by a central portion 15 concavely rounded in cross-section. This central portion is suitably centrally located in the insert. The obtuse angle α between the flank surfaces of the groove may amount to 140°, although both larger and smaller obtuse angles are conceivable. The V-ridge 13, cooperating with the groove 12, similarly has two flank sides, generally designated 16, 16', which are separated by a convexly rounded central portion 17. This convexly rounded central portion 17 has a larger radius of curvature than the concavely rounded central portion 15 in the groove, whereby to form between these portions a clearance space 18 of substantially crescent-shaped cross-section.

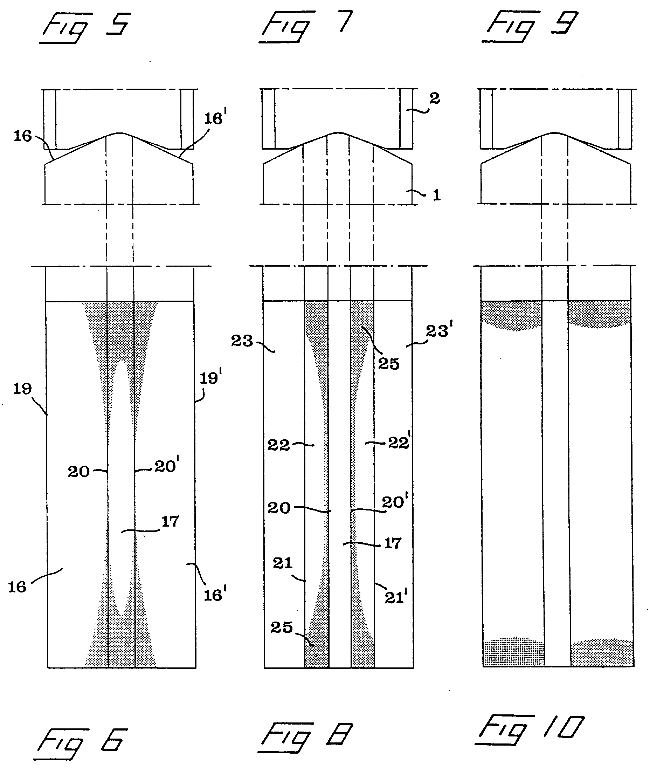

Reference is now made to Figs 5 and 6, which illustrate the design of the V-shaped ridge 13 in prior-art cut-off tools (see e.g. SE 8601533-6). According to the prior art, the two flank sides 16, 16' of the V-ridge consist of two completely planar surfaces which extend from the outer edges 19, 19' to the break lines 20, 20' defining the convexly rounded central portion 17. The obtuse angle between these two planar surfaces 16, 16' generally is about 10° less than the obtuse angle α between the flank surfaces 14, 14' of the V-groove (if α = 140°, said angle is 130°), which means that the angular difference or the clearance angle between each flank surface in the V-groove and the corresponding flank surface on the V-ridge is about 5°. The clearance between these flank surfaces starts at each break line 20 and 20'. The clearance angle is relatively large, which means that the space between cooperating flank surfaces of the insert and of the V-ridge increases quite dramatically immediately outside the respective break line. If, in manufacture, the insert happens to be designed with an underside having a concavely curved shape in the longitudinal direction, the underside of the insert will engage the underlying V-ridge 13 substantially in the areas shown by the shadings in Fig. 6, i.e. only along extremely narrow, longitudinal surface areas in the immediate vicinity of the centre of the V-ridge. At the front edge and the rear edge of the V-ridge 13, the clearance space 18 has disappeared and the rounded central portions 15 and 17 are in contact with each other. This contact is not adverse in itself in cut-off operations, i.e. when the feed direction of the tool is parallel to the centre line of the plate 1. However, when the feed direction is changed so as to become perpendicular to the centre line, the contact or engagement surfaces become too small with a consequential, manifest risk of plastic deformation of the V-ridge 13. This, in turn, may give rise to instability of the insert and an undesired angular deviation thereof. Also, the plastic deformation results in a lowering of the cutting edge line. This condition is of course not satisfactory.

Reference is now made to Figs 7 and 8, which illustrate how each of the two flank sides of the V-ridge according to the invention are divided by break lines 21, 21' into inner and outer part surfaces 22, 22' and 23, 23', respectively (see also the enlarged cross-section in Fig. 4). Now, assuming that the obtuse angle between the outer part surfaces 23, 23' is maintained at e.g. 130°, as in conventional tools, the broken flank sides are so designed that the obtuse angle between the inner part surfaces 22, 22' becomes considerably larger, suitably only slightly smaller than the obtuse angle α between the flank surfaces 14, 14' of the V-groove. Advantageously, the broken flank sides of the V-ridge are so designed that the angular difference or clearance angle β between each inner part surface 22, 22' and an associated flank surface 14 and 14', respectively, in the V-groove of the insert is in the range of 0.1-2°, suitably 0.5-1.5°, while the corresponding angular difference between the same groove flank surface and an outer part surface 23 and 23', respectively, is in the range of 3-10°, suitably 4-6°. The size of the inner, active part surfaces 22, 22' is suitably such that the distance between the two break lines 21, 21' defining these surfaces from the outer part surfaces is 0.6-0.8 times, suitably about 0.7 times the width of the V-groove 12 counted as the distance between the break lines 24, 24'.

In other words, the invention resides in that the space or clearance, previously increasing quite dramatically, between the individual flank surface in the V-groove and the corresponding flank surface of the V-ridge (clearance angle =5°) in the broken design according to Figs 7 and 8 is filled to a major extent with material, such that the respective flank surfaces are located considerably closer to each other (clearance angle about 1°). This means that even a relatively small plastic deformation in the steel material of the V-ridge is sufficient for providing contact with the concave underside of an insert over considerably longer surface areas, as illustrated by the shadings 25 in Fig. 8. In this manner, also such inserts as have undersides of more or less concavely curved shape will engage the subjacent V-ridge in a satisfactory manner, whereby to minimise the risk of chipping of the insert.

In this context, it should be pointed out that it is not permissible, for basic constructional reasons, to provide an engagement of the insert with the V-ridge in contact points located too far away from the centre of the insert, for the insert may then be subjected to forces tending to crack it in the area of its centre. This phenomenon is illustrated in Figs 9 and 10, of which Fig. 10 shows how the short contact surfaces at the opposite ends of a concave insert extend as far as the edges of the long sides of the bottom surface 4. This constructional limitation means that the above-mentioned V-ridge 13 cannot be designed only with simple planar surfaces having a small clearance angle in relation to the flank surfaces of the V-groove, and so, the object of the invention can only be solved by designing the two flank sides of the V-ridge with broken part surfaces, as described above.

Although the invention has been described above only with respect to the V-groove 12 provided in the underside of the insert 2, it should be pointed out that the insert generally has a corresponding V-groove 12' on its upper side, the upper V-groove cooperating (not visible in the drawings) with a ridge or cam of V-shaped cross-section on the underside of the clamping arm 7. The inventive design of the V-ridge with broken part surfaces is also applicable to such an upper V-ridge on the underside of the clamping arm 7. Thus, in the manufacture of the inventive tool it is possible to use one and the same form cutter for providing both lower and upper V-ridges at the insert-receiving recess 3.

## Claims

1. A tool for cut-off or similar turning operations, comprising a holder in the form of a comparatively thin plate or plate-like part (1) of a first material, such as steel, and a cutting insert (2) of a second, harder material, especially cemented carbide, the holder plate (1) having, in at least one free end thereof, an outwardly opening recess (3) for receiving said insert, said recess being substantially defined by a bottom wall (4), an inner or rear wall (5) and an upper wall (6) which is part of an elastically movable clamping arm (7) formed in the plate and serving to retain the insert (2) in the recess (3), the insert having, at least on its underside, a female groove (12) of substantially V-shaped cross-section, which is designed to cooperate with a male ridge or cam (13) of analogous V-shaped cross-section, which is formed in the bottom wall (4) of the recess, said V-groove (12) having two substantially planar flank surfaces (14, 14') extending at an obtuse angle to each other and being separated by a central portion (15) concavely rounded in cross-section and having a curvature or diameter which is smaller than an analogously, although convexly rounded, central portion (17) which separates two flank sides (16, 16') on the cooperating ridge (13), to provide a clearance (18) between the central portions (15, 17) of the groove and the ridge, respectively, the two flank sides (16, 16') of the ridge (13) enclosing an obtuse angle which is smaller than the obtuse angle between the flank surfaces (14, 14') of the groove (12), **characterized** in that each of said two flank sides (16, 16') on the V-shaped ridge (13) of the bottom wall is broken by a break line (21, 21') so as to form two part surfaces (22, 23; 22', 23'), the two inner, substantially planar part surfaces (22, 22') located closest to the central portion (17) of the ridge enclosing an obtuse angle which is, on one hand, greater than a corresponding obtuse angle between the two outer part surfaces (23, 23') and, on the other hand, smaller than the obtuse angle between the flank surfaces (14, 14') of the groove, the angular difference or clearance angle (β) between each inner part surface (22, 22') and the cooperating flank surface (14, 14') in the groove of the insert being in the range of 0,1 to 2°.

2. A tool as claimed in claim 1, **characterised** in that the obtuse angle between the two inner part surfaces (22, 22') is but slightly smaller than the obtuse angle between the two flank surfaces (14, 14') of the V-groove and considerably greater than the obtuse angle between the two outer part surfaces (23, 23').

3. A tool as claimed in claim 2, **characterised** in that the angular difference or clearance angle (β) between each inner part surface (22, 22') and a cooperating flank surface (14, 14') in the groove of the insert is in the range of 0.5-1.5°, while the corresponding angular difference between the same flank surface of the groove and an outer part surface (23, 23') is in the range of 3-10°, suitably 4-6°.

4. A tool as claimed in any one of the preceding claims, **characterised** in that the distance between the two break lines (21, 21') defining the inner part surfaces (22, 22') from the outer ones (23, 23') is 0.6-0.8 times, suitably about 0.7 times the width of the V-groove, counted as the distance between the lower boundary edges (24, 24') of the flank surfaces (14, 14').

## Patentansprüche

1. Werkzeug zum Abschneiden oder ähnliche Dreharbeiten mit einem Halter in der Form einer vergleichsweise dünnen Platte oder einem plattenartigen Teil (1) aus einem ersten Material, wie zum Beispiel Stahl, und einem Schneideinsatz (2) aus einem zweiten, härteren Material, insbesondere Sinterkarbid, wobei die Halteplatte (1) mindestens an ihrem einen freien Ende eine sich nach außen öffnende Ausnehmung (3) hat zur Aufnahme des Einsatzes, wobei die Ausnehmung im wesentlichen durch eine Bodenwand (4), eine innere oder hintere Wand (5) und eine obere Wand (6) gebildet ist, die Teil eines elastisch bewegbaren Klemmarmes (7) ist, der in der Platte geformt ist und zum Halten des Einsatzes (2) in der Ausnehmung (3) dient, wobei der Einsatz mindestens auf seiner Unterseite eine Aufnahmenut (12) mit im wesentlichen V-förmigem Querschnitt hat, die so aufgebaut ist, daß sie mit einer Einsteckrippe oder Nocke (13) von analog V-förmigem Querschnittzusammenwirkt, die in der Bodenwand (4) der Ausnehmung gebildet ist, wobei die V-Nut (12) zwei im wesentlichen ebene Flankenoberflächen (14, 14') hat, die sich unter einem stumpfen Winkel zueinander erstrecken und durch ein Mittelteil (15) getrennt sind, das einen konkav gerundeten Querschnitt hat und eine Krümmung oder einen Durchmesser, der kleiner ist als ein analog, wenngleich konvex gerundeter Mittelteil (17), welcher die zwei Flankenseiten (16, 16') auf der zusammenwirkenden Rippe (13) trennt, um einen Freiraum (18) zwischen den Mittelteilen (15, 17) der Nut bzw. der Rippe vorzusehen, wobei die zwei Flankenseiten (16, 16') der Rippe (13) einen stumpfen Winkel einschließen, der kleiner ist als der stumpfe Winkel zwischen den Flankenoberflächen (14, 14') der Nut (12), **dadurch gekennzeichnet**, daß jede der zwei Flankenseiten (16, 16') auf der V-förmigen Rippe (13) der Bodenwand durch eine Bruchlinie (21, 21') so gebrochen ist, daß zwei Teiloberflächen (22, 23; 22', 23') gebildet werden, die zwei inneren, im wesentlichen ebenen Teiloberflächen (22, 22') am nächsten dem Mittelteil (17) der Rippe unter Einschluß eines stumpfen Winkels angeordnet sind, der einerseits größer ist als ein entsprechender stumpfer Winkel zwischen den zwei Außenteiloberflächen (23, 23') und andererseits kleiner ist als der stumpfe Winkel zwischen den Flankenoberflächen (14, 14') der Nut, wobei die Winkeldifferenz oder der Freiwinkel (β) zwischen jeder Innenteiloberfläche (22, 22') und der entsprechenden Flankenoberfläche (14, 14') in der Nut des Einsatzes im Bereich von 0,1 bis 2° liegt.

2. Werkzeug nach Anspruch 1, **dadurch gekennzeichnet**, daß der stumpfe Winkel zwischen den zwei Innenteiloberflächen (22, 22') fast etwas kleiner ist als der stumpfe Winkel zwischen den zwei Flankenoberflächen (14, 14') der V-Nut und erheblich größer als der stumpfe Winkel zwischen den zwei Außenteiloberflächen (23, 23').

3. Werkzeug nach Anspruch 2, **dadurch gekennzeichnet**, daß die Winkeldifferenz oder der Freiwinkel (β) zwischen jeder Innenteiloberfläche (22, 22') und einer zusammenwirkenden Flankenoberfläche (14, 14') in der Nut des Einsatzes in dem Bereich von 0,5 - 1,5° liegt, während die entsprechende Winkeldifferenz zwischen derselben Flankenoberfläche der Nut und einer Außenteiloberfläche (23, 23') im Bereich von 3 - 10° liegt, vorzugsweise 4 - 6°.

4. Werkzeug nach einem der vorhergehenden Ansprüche, **dadurch gekennzeichnet**, daß der Abstand zwischen den zwei Bruchlinien (21, 21'), welche die Innenteiloberflächen (22, 22') bestimmen, von den äußeren (23') das 0,6 - 0,8-fache, vorzugsweise etwa 0,7-fache der Breite der V-Nut beträgt, als der Abstand zwischen den unteren Grenzkanten (24, 24') der Flankenoberflächen (14, 14') gezählt.

## Revendications

1. Outil de tronçonnage ou de travaux de tournage similaires, comprenant un support se présentant sous la forme d'une plaque ou d'une partie en forme de plaque relativement mince (1) faite d'un premier matériau, tel que de l'acier, et une pièce rapportée de coupe (2) faite d'un second matériau plus dur, en particulier du carbure cémenté, la plaquette support (1) comportant, dans au moins une extrémité libre de celle-ci, un évidement (3) s'ouvrant vers l'extérieur pour recevoir ladite pièce rapportée, ledit évidement étant sensiblement défini par une paroi inférieure (4), une paroi intérieure ou arrière (5) et une paroi supérieure (6), qui fait partie d'un bras de bridage (7) pouvant être déplacé de manière élastique, formé dans la plaque et servant à maintenir la pièce rapportée (2) dans l'évidement (3), la pièce rapportée comportant, au moins sur sa face inférieure, une gorge femelle (12) d'une section transversale sensiblement en forme de V, qui est conçue pour opérer en association avec une arête ou une came mâle (13) ayant une section transversale en V analogue, qui est formée dans la paroi inférieure (4) de l'évidement, ladite gorge en V (12) présentant deux surface de flanc sensiblement planes (14, 14') s'étendant en formant un angle obtus l'une par rapport à l'autre et étant séparées par une partie centrale (15), d'une section transversale arrondie de manière concave, et ayant une courbure ou un diamètre qui est plus petit que celui de la partie centrale (17) arrondie de manière analogue, bien que de manière convexe, qui sépare les côtés de flanc (16, 16') de l'arête (13) opérant en association avec elle, pour fournir un dégagement (18) entre les parties centrales (15, 17) de la gorge et de l'arête, respectivement, les deux côtés de flanc (16, 16') de l'arête (13) définissant un angle obtus qui est plus petit que l'angle obtus défini entre les surfaces de flanc (14, 14') de la gorge (12), caractérisé en ce que chacun desdits deux côtés de flanc (16, 16') de l'arête en forme de V (13) de la paroi inférieure est rompu par une ligne de rupture (21, 21') de manière à former deux surfaces partielles (22, 23 ; 22', 23'), les deux surfaces partielles intérieures sensiblement planes (22, 22') se trouvant le plus près de la partie centrale (17) de l'arête définissant un angle obtus qui est, d'une part, plus grand que l'angle obtus correspondant entre les deux surfaces partielles extérieures (23, 23') et, d'autre part, plus petit que l'angle obtus entre les surfaces de flanc (14, 14') de la gorge, la différence angulaire ou l'angle de dépouille (β) entre chaque surface partielle intérieure (22, 22') et la surface de flanc opérant en association réciproque (14, 14') de la gorge de la pièce rapportée se situant dans une fourchette comprise entre 0,1 et 2°.

2. Outil selon la revendication 1, caractérisé en ce que l'angle obtus entre les deux surfaces partielles intérieures (22, 22') n'est que légèrement plus petit que l'angle obtus entre les deux surfaces de flanc (14, 14') de la gorge en V, et considérablement plus grand que l'angle obtus entre les deux surfaces partielles extérieures (23, 23').

3. Outil selon la revendication 2, caractérisé en ce que la différence angulaire ou l'angle de dépouille (β) entre chaque surface partielle intérieure (22, 22') et une surface de flanc opérant en association réciproque (14, 14') de la gorge de la pièce rapportée se situe dans une fourchette comprise entre 0,5 et 1,5°, tandis que la différence angulaire correspondante entre la même surface de flanc de la gorge et une surface partielle extérieure (23, 23') se situe dans une fourchette comprise entre 3 et 10°, de manière appropriée 4 et 6°.

4. Outil selon l'une quelconque des revendications qui précèdent, caractérisé en ce que la distance entre les deux lignes de rupture (21, 21') définissant les surfaces partielles intérieures (22, 22') de celles extérieures (23, 23') correspond à 0,6 à 0,8 fois, de manière judicieuse environ 0,7 fois, la largeur de la gorge en V, mesurée comme représentant la distance entre les bords limites inférieurs (24, 24') des surfaces de flanc (14, 14').
